Europäisches Patentamt

European Patent Office

Office européen des brevets

(11) Veröffentlichungsnummer: **0 356 771**

**A2**

(12) **EUROPÄISCHE PATENTANMELDUNG**

(21) Anmeldenummer: 89114703.5

(51) Int. Cl.⁵: **A01C 7/04**

(22) Anmeldetag: 09.08.89

(30) Priorität: 31.08.88 DE 3829434

(43) Veröffentlichungstag der Anmeldung:
07.03.90 Patentblatt 90/10

(84) Benannte Vertragsstaaten:
**DE FR GB**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Nörenberg, Adolf**
**Halenstrasse 14**
**D-4531 Lotte(DE)**
Erfinder: **Johannes, Friedhard**
**Zur Heide 23**
**D-2875 Ganderkesee 1(DE)**

(54) **Pneumatische Einzelkornsämaschine.**

(57) Pneumatische Einzelkornsämaschine mit einem Saatgutbehälter und einer Saugkammer, die voneinander durch eine umlaufende Vereinzelungsscheibe getrennt sind, welche auf der der Saugkammer abgewandten Seite im unteren Bereich durch den im Saatgutbehälter vorhandenen Saatgutvorrat geführt wird und konzentrisch zur Vereinzelungsscheibenachse im etwa gleichen Umfangsabstand voneinander angeordnete Löcher aufweist, wobei die Saugkammer sich längs eines Teils der Bahn der Löcher erstreckt und an einem Punkt der Bahn der Unterdruck unterbrochen ist, wobei zwischen dem Bereich der Unterdruckunterbrechung und dem Saatgutvorrat des Saatgutbehälters eine die Löcher der Vereinzelungsscheibe reinigende Vorrichtung angeordnet ist. Um auch bei Einzelkornsämaschinen mit relativ tiefen Löchern auf einfachste Weise eine sicherere Reinigung der Löcher der Vereinzelungsscheibe zu gewährleisten, ist vorgesehen, daß die die Löcher (12) der Vereinzelungsscheibe (11) reinigende Vorrichtung (26) auf der der Saugkammer (15) abgewandten Seite (29) der Vereinzelungsscheibe (11) angeordnet ist.

FIG. 5

## Pneumatische Einzelkornsämaschine

Die Erfindung betrifft eine pneumatische Einzelkornsämaschine gemäß des Oberbegriffes des Patentanspruches 1.

Eine derartige Einzelkornsämaschine ist durch die EP-OS 01 95 900 bekannt. Diese Einzelkornsämaschine weist einen Saatgutbehälter und eine Saugkammer auf, welche voneinander durch eine umlaufende Vereinzelungsscheibe getrennt sind. Die Vereinzelungsscheibe wird auf der der Saugkammer abgewandten Seite im unteren Bereich durch den im Saatgutbehälter vorhandenen Saatgutvorrat geführt. Die Vereinzelungsscheibe weist im gleichen Umfangsabstand voneinander angeordnete Löcher auf, wobei die Saugkammer sich längs eines Teiles der Bahn der Löcher erstreckt und an einem Punkt der Bahn der Unterdruck unterbrochen ist. In dem Bereich, wo die Vereinzelungsscheibe durch den Saatgutvorrat geführt wird, lagern sich aufgrund des an den Löchern anliegenden Unterdruckes im Bereich der Saugkammer Saatkörner an, wodurch eine Vereinzelung erfolgt. An dem Punkt der Bahn, an dem der Unterdruck unterbrochen ist, fallen die Körner im Normalfall von der Vereinzelungsscheibe ab und werden in einer von dem Säschar der Einzelkornsämaschine gezogenen Furche im Boden abgelegt. Nun kommt es jedoch immer wieder in der Praxis vor, daß sich in den Löchern der Vereinzelungsscheibe die vereinzelten Saatkörner festsetzen und nicht von der Scheibe abfallen. Diese Saatkörner verstopfen die Löcher oder reduzieren den Unterdruck an diesen teilweise verstopften Löchern derart, daß sich an diesen Löchern, wenn sie durch den Saatgutvorrat geführt werden, keine Saatkörner mehr anlagern. Hierdurch erfolgt also eine fehlerhafte Vereinzelung der Saatkörner und es entstehen somit Fehlstellen bei der Ablage des Saatgutes im Boden. Hierzu schlägt die eingangs genannte Druckschrift vor, zwischen dem Bereich der Unterdruckunterbrechung und dem Saatgutvorrat des Saatgutbehälters eine die Löcher der Vereinzelungsscheibe reinigende Vorrichtung anzuordnen. Diese die Löcher der Vereinzelungsscheibe reinigende Vorrichtung ist auf der der Saugkammer zugewandten Seite der Vereinzelungsscheibe also auf der der Vereinzelungsseite der Vereinzelungsscheibe abgewandten Seite angeordnet. Diese die Löcher der Vereinzelungsscheibe reinigende Vorrichtung ist als Druckluftrohr ausgebildet, wobei die in den Löchern sich befindenden Verstopfungen, wenn die Löcher das Druckluftrohr passieren, mit Druckluft aus den Löchern herausgeblasen werden. Diese Anordnung ist jedoch sehr aufwendig, sowie erfordert sie einen großen konstruktiven Aufwand. Darüber abreitet sie bei fest in den Löchern sitzenden Verstopfungen nicht ausreichend sicher.

Der Erfindung liegt die Aufgabe zugrunde, auch bei Einzelkornsämaschinen mit relativ tiefen Löchern auf einfachste Weise eine sichere Reinigung der Löcher der Vereinzelungsscheibe zu gewährleisten.

Diese Aufgabe wird erfindungsgemäß durch die kennzeichnende Maßnahme des Patentanspruches 1 gelöst.

Infolge dieser Maßnahme wird auf einfachste Weise eine sichere Reinigung der Löcher der Vereinzelungsscheibe von den die Löcher verstopfenden Saatkörnern oder sonstigen Elementen erreicht. Hierbei wirkt sich positiv aus, daß diese Reinigung der Löcher noch durch den in der Saugkammer anliegenden Unterdruck unterstützt wird. Von diesem Unterdruck werden die Verunreinigungen aus den Löchern herausgesaugt.

Die die Löcher der Vereinzelungsscheibe reinigende Vorrichtung ist also auf der Vereinzelungsseite der Vereinzelungsscheibe angeordnet. In vorteilhafter Weise weist die reinigende Vorrichtung eine Platte mit zumindest einer in die Löcher fassende Erhebung auf. Durch die in die Löcher fassende Erhebung wird sichergestellt, daß in jedem Falle die in den Löchern festsitzenden und die Löcher verstopfenden Saatkörner, Saatkörnerteile oder andere Teile gelöst oder herausgedrückt werden, so daß sie aus den Löchern herausfallen oder noch zusätzlich von dem Unterdruck im Bereich der Saugkammer aus den Löchern herausgesaugt werden. Um sicherzustellen, daß die Erhebung der Platte auch in jedem Falle in die Löcher faßt, ist vorgesehen, daß die die Platte federnd am Gehäuse der Einzelkornsämaschine angeordnet ist. Darüber hinaus wird durch diese Anordnung der Platte am Gehäuse der Einzelkornsämaschine sichergestellt, daß es zu keinen Beschädigungen an der Vereinzelungsscheibe oder an der Platte kommt, falls Teile nicht herausgedrückt werden können, da die Platte federnd ausweichen kann. In einfachster Weise ist die Erhebung der Platte kugelförmig ausgebildet. Dieses ist beispielsweise dadurch möglich, daß in der Platte eine Bohrung angebracht ist, in welcher eine Kugel eingesetzt wird, die aus sehr hartem Material besteht. und damit sehr verschleißfest ist. Durch die federnde Anordnung wird die Erhebung sicher in die Löcher gedrückt.

Um auch derartige Verstopfungen beseitigen zu können, welche durch Saatkörner oder andere Teile verursacht werden, welche einen größeren Durchmesser als die Löcher aufweisen und auf der Vereinzelungsseite aus der Vereinzelungsscheibe herausragen ist, erfindungsgemäß vorgesehen, daß die reinigende Vorrichtung auf der den Löchern zugewandten Seite eine sich in Drehrichtung der Vereinzelungsscheibe stetig annähernde und die Löcher überdeckende Kante aufweist. Durch diese Kante werden dann die in den Löchern festsitzenden Verunreinigungen und Verstopfungen abgeschert und die dann noch in den Löchern festsitzenden Teile werden nach dem Abscheren von der reinigenden Vorrichtung aus den Löchern herausgedrückt.

Weitere Einzelheiten der Erfindung sind der Beispielsbeschreibung und den Zeichnungen zu entnehmen. Hierbei zeigen

Fig. 1 eine Einzelkornsämaschine mit vorgeordnetem Düngerbehälter in Prinzipdarstellung und in Seitenansicht,

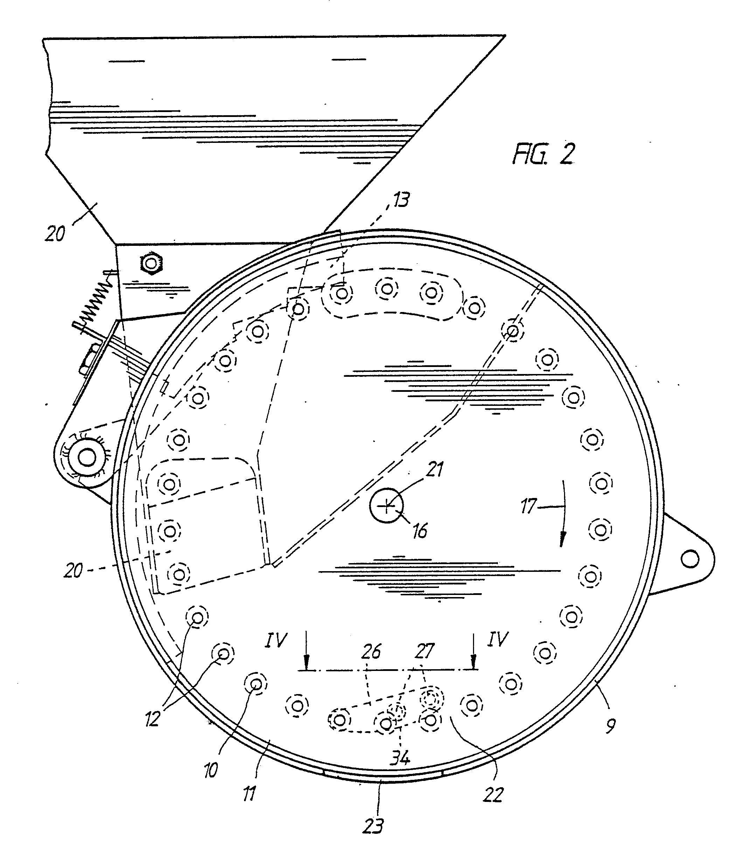

Fig. 2 ein Vereinzelungsaggregat einer Einzelkornsämaschine in der Seitenansicht mit abgenommenem Saugdeckel,

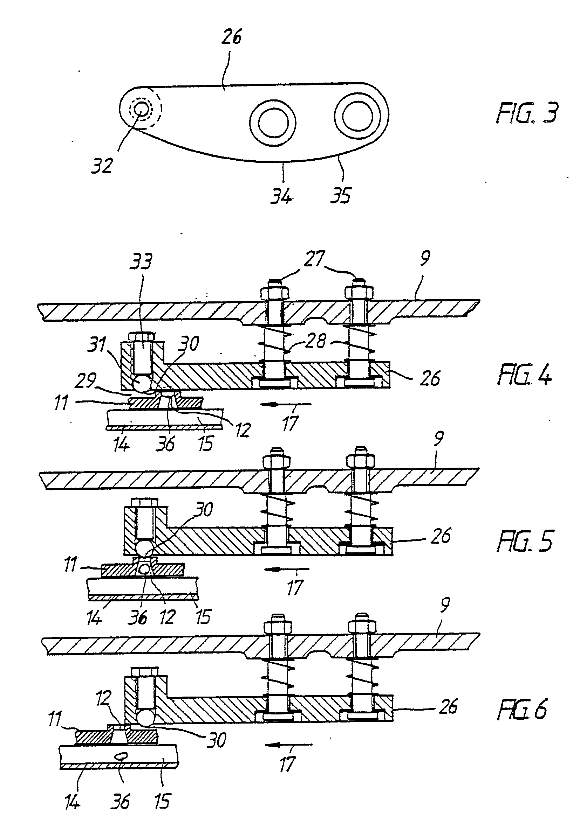

Fig. 3 die als Platte ausgebildete reinigende Vorrichtung in der Seitenansicht,

Fig. 4 die Anordnung der reinigenden Platte in der Ansicht IV - IV,

Fig. 5 die Anordnung der reinigenden Platte in der Ansicht IV - IV und

Fig. 6 die Anordnung der reinigenden Platte in der Ansicht IV - IV.

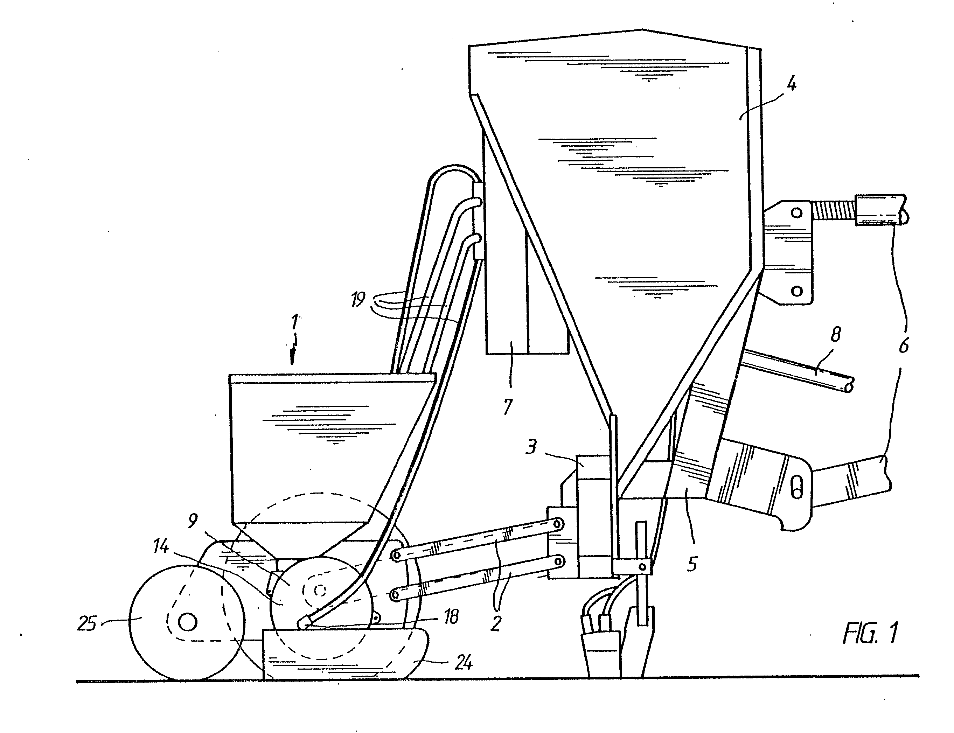

Die in Fig. 1 dargestellte Einzelkornsämaschine 1 ist mit weiteren Einzelkornsämaschinen über einzelne Parallelogrammlenker 2 an dem Zentralrahmen 3 angelenkt. Des weiteren ist an den Zentralrahmen 3 der Düngerbehälter 4 aufgebaut. An dem Zentralrahmen 3 ist weiterhin der Dreipunktanbaubock 5 für den Anbau an einen Dreipunktkraftheber 6 eines Schleppers angeordnet. Hinter dem Düngerbehälter 4 ist das Gebläse 7 angeordnet, welches über die Gelenkwelle 8 von der Schlepperzapfwelle angetrieben wird. Die Einzelkornsämaschine 1 weist den in dem Gehäuse 9 angeordneten Vereinzelungsmechanismus 10 auf. Der Vereinzelungsmechanismus 10 besteht aus der Vereinzelungsscheibe 11 mit den Löchern 12, dem Abstreifer 13 sowie der im Deckel 14 untergebrachten Saugkammer 15. Die Vereinzelungsscheibe 11 ist auf der Antriebswelle 16 drehfest gelagert. Über diese Antriebswelle 16 wird die Vereinzelungsscheibe 11 in Pfeilrichtung 17 in Drehung versetzt. Die Saugkammer 15 wird über den Druckluftanschluß 18 und den jeweiligen Schläuchen 19 von dem Sauggebläse 7 mit Unterdruck beaufschlagt. Die umlaufende Vereinzelungsscheibe 11 trennt den Saatgutbehälter 20 und die Saugkammer 15 voneinander. Die Vereinzelungsscheibe 11 wird in Drehrichtung 17 durch den sich im Vorratsbehälter 20 befindlichen Saatgutvorrat geführt. Indem die Löcher 12 der Vereinzelungsscheibe 11 durch den Saatgutvorrat im Saatgutbehälter 20 geführt werden, lagern sich an den konzentrisch zur Vereinzelungsscheibenachse 21 angeordneten Löcher 12, die im gleichen Abstand zueinander angeordnet sind, über den Bereich, über den sich die Saugkammer 15 erstreckt, Saatkörner an. Sollten mehrere Saatkörner sich an einem der Löcher 12 angelagert haben, so werden sie von dem Abstreifer 13 abgestreift. An der Stelle 22 endet die Saugkammer und der Unterdruck, der an den Löchern 12 anliegt und wird unterbrochen. Hier fallen nun die an den Löchern 12 angelagerten Saatkörner ab und fallen durch die sich im Gehäuse 9 befindliche Öffnung 23 in die von dem Säschar 24 gezogene Saatfurche und werden somit im Boden abgelegt. Die im Boden abgelegten Körner werden durch die hinter der Einzelkornsämaschine angeordnete Druckrolle 25 angedrückt. Zwischen dem Bereich 22 der Unterdruckunterbrechung und dem Saatgutvorrat des Saatgutbehälters 20 ist die reinigende Vorrichtung 26 angeordnet, welche als Platte ausgebildet ist. Die Platte 26 ist mittels der beiden Bolzen 27 an dem Gehäuse 9 befestigt. Die Platte 26 wird über die auf dem Bolzen 27 sich befindlichen Federn 28 gegen die Vereinzelungsscheibe 11 gedrückt. Die Platte 26 befindet sich auf der der Saugkammer 15 der Vereinzelungsscheibe 11 abgewandten Seite 29 angeordet. Die reinigende Vorrichtung, die als Platte 26 ausgebildet ist, ist also auf der Vereinzelungsseite 29 der Vereinzelungsscheibe 11 angeordnet. Die Platte 26 weist die Erhebung 30 auf. Diese Erhebung 30 wird von einer Kugel 31 gebildet, die in der sich in der Platte 26 befindlichen Bohrung 31 mittels der Schraube 33 gehalten wird. Somit ist die Erhebung 30 der Platte 26 kugelförmig ausgebildet. Über die federnde Anordnung der Platte 26, welche durch die Druckfedern 28 gewährleistet ist, wird die Erhebung 30 in die Löcher 12 der Vereinzelungsscheiben 11 gedrückt. Des weiteren weist die Platte 26 auf der den Löchern 12 zugewandten Seite 34 eine sich in Drehrichtung 17 der Vereinzelungsscheibe 11 stetig annähernde und die Löcher 12 überdeckende Kante 35 auf.

Die Funktionsweise der Platte 26 mit der Erhebung 30 ist folgende:

Wenn sich in einem Loch 12 ein Saatkorn 36 entsprechend Fig. 4 festgesetzt hat, verstopft dieses Saatkorn 36 das Loch 12. Wenn nach dem Unterbrechen des Unterdruckes an der Stelle 22 dieses Saatkorn 36 nicht aus dem Loch herausfällt, so wird es nach dem Weiterdrehen die Erhebung 30 an der Platte 26 passieren, wie dies in Fig. 5 dargestellt ist. Wenn die Erhebung 30 gemäß Fig. 5 in das Loch 12 faßt, wird das Saatkorn 36 in Richtung der Saugkammer 15 gedrückt und von dem in der Saugkammer 15 herrschenden Unterdruck abgesaugt, wie dieses in Fig. 6 dargestellt ist. Somit ist also immer gewährleistet, daß über die Erhebung 30 der Platte 26 die Löcher 12 sicher gereinigt werden. Sollte ein Saatkorn sich derart festge setzt haben, daß es die Vereinzelungsscheiben 11 noch sehr weit überragt oder überhaupt überragt, so wird es zunächst durch die Kante 34 der Platte 26 abgeschert, so daß der anschließende, abgescherte und noch im Loch 12 festsitzende Teil der Vorunreinigung oder Verstopfung dann von der Erhebung 30, wie vor geschildert, durch das Loch 12 in Richtung der Saugneite der Vereinzelungsscheibe 11 gedrückt und dann aus dem Loch 12 herausfällt und von dem Unterdruck in der Saugkammer 14 abgesaugt wird. Das Loch 12 ist wieder frei.

**Ansprüche**

1. Pneumatische Einzelkornsämaschine mit einem Saatgutbehälter und einer Saugkammer, die voneinander durch eine umlaufende Vereinzelungsscheibe getrennt sind, welche auf der der Saugkammer abgewandten Seite im unteren Bereich durch den im Saatgutbehälter vorhandenen Saatgutvorrat geführt wird und konzentrisch zur Vereinzelungsscheibenachse im etwa gleichen Umfangsabstand voneinander angeordnete Löcher aufweist, wobei die Saugkammer sich längs eines Teils der Bahn der Löcher erstreckt und an einem Punkt der Bahn der Unterdruck unterbrochen ist, wobei zwischen dem Bereich der Unterdruckunterbrechung und dem Saatgutvorrat des Saatgutoehälters eine die Löcher der Vereinzelungsscheibe reinigende Vorrichtung angeordnet ist, dadurch gekennzeichnet, daß die die Löcher (12) der Vereinzelungsscheibe (11) reinigende Vorrichtung (26) auf der der Saugkammer (15) abgewandten Seite (29) der Vereinzelungsscheibe angeordnet ist.

2. Einzelkornsämaschine nach Anspruch 1, dadurch gekennzeichnet, daß die reinigende Vorrichtung (26) auf der Vereinzelungsseite (29) der Vereinzelungsscheibe (11) angeordnet ist.

3. Einzelkornsämaschine nach Anspruch 1, und/oder 2, dadurch gekennzeichnet, daß die reinigende Vorrichtung (26) eine Platte mit zumindest einer in Löcher (12) faßende Erhebung (30) ist.

4. Einzelkornsämaschine nach einem oder mehreren der vorstehenden Ansprüche, dadurch gekennzeichnet, daß die Platte (26) federnd am Gehäuse (9) der Einzelkornsämaschine (1) angeordnet ist.

5. Einzelkornsämaschine nach einem oder mehreren der vorstehenden Ansprüche, dadurch gekennzeichnet, daß die Erhebung (30) der Platte (26) kugelförmig ausgebildet ist.

6. Einzelkornsämaschine nach einem oder mehreren der vorstehenden Ansprüche, dadurch gekennzeichnet, daß die Erhebung (30) in die Löcher (12) gedrückt wird.

7. Einzelkornsämaschine nach Anspruch 1, dadurch gekennzeichnet, daß die reinigende Vorrichtung (26) auf der den Löchern (12) zugewandten Seite (34) eine sich in Drehrichtung (17) der Vereinzelungsscheibe (11) stetig annähernde und die Löcher (12) überdeckende Kante (35) aufweist.

FIG. 1

FIG. 2

FIG. 3

FIG. 4

FIG. 5

FIG 6